# EUROPEAN PATENT APPLICATION

(11) **EP 3 162 639 A1**
(43) Date of publication of application: **03.05.2017**
(21) Application number: 15812251.5
(22) Date of filing: 28.05.2015
(51) Int. Cl.: B60R 21/00, G08B 21/00, G08G 1/13

(54) **AUTOMATIC ALERTING DEVICE AND AUTOMATIC ALERTING METHOD**

(30) Priority: 24.06.2014 JP 2014129220
(71) Applicant: Robert Bosch GmbH, 70442 Stuttgart (DE)
(72) Inventor: OBUCHI Hisashi, Yokohama-shi Kanagawa 224-8501 (JP)
(86) International application number: PCT/JP2015/065384
(87) International publication number: WO 2015/198786

(57) **Abstract**

An automatic alerting device and an automatic alerting method are provided, the automatic alerting device and the automatic alerting method capable of alerting a person near a site of a vehicle accident to occurrence of the accident when a vehicle is involved in the accident.

The automatic alerting device according to the invention has: a state detection section 20 that detects a state of the vehicle; an accident determination section 31 that determines whether the vehicle is involved in the accident on the basis of the state of the vehicle detected by the state detection section 20; an alerting section 40 that alerts the outside of the vehicle; and a control section 32 that controls the alerting section 40. The alerting section 40 has: an alarm 42 that generates sound to the outside of the vehicle; and a hazard-warning lamp 43 that emits light to the outside of the vehicle. The control section 32 makes the alarm 42 generate the sound and makes the hazard-warning lamp 43 emit the light when the accident determination section 31 determines that the vehicle is involved in the accident.

## Description

### Technical Field

The invention relates to an automatic alerting device and an automatic alerting method that automatically alert outside to occurrence of a vehicle accident.

### Background Art

In recent years, many riders enjoy riding off-road motorcycles in a rugged mountain terrain. The rugged mountain terrain is particularly deserted and is often out of service coverage of cellular phones and the like. In the case where the rider is involved in an accident while riding on the motorcycle alone, the rider cannot request rescue through the cellular phone to the outside. In addition, because the rugged mountain terrain is deserted, the injured rider can do nothing but wait until another rider accidentally passes by a site of the accident.

A device that detects occurrence of an accident and automatically sends a message requesting rescue to the outside at a time when the accident, such as falling of a vehicle like a two-wheeled vehicle, occurs has been known (see PTL 1).

### Citation List

### Patent Literature

[PTL 1] WO 2012/085324

### Summary of the Invention

### Technical Problem

In the case where the rider is severely injured, it is extremely important to treat the injured rider as soon as possible to save the rider's life. However, such a problem arises that, even when the message requesting the rescue is sent to the outside, it takes extremely long time for a rescuer to arrive at the site of the accident in the rugged mountain terrain. Such a problem also arises that, even when the rescuer, such as a rescue team member who has received the message requesting the rescue, is headed for a rescue effort, it is difficult for the rescuer to find the injured rider at midnight or in bad weather and thus takes long time to find the injured rider. Therefore, the injured is preferably rescued by the other rider who passes nearby the site of the accident in terms of the prompt rescue of the injured.

However, even when the other rider passes nearby the site of the accident, he or she may not notice an accident vehicle or the injured at midnight or in the bad weather and may pass the site. In particular, in the case where the injured and the vehicle are located away from a road that the other rider runs, such as a case where the injured and the vehicle fall over a cliff by the accident, it is difficult for the other rider to find the injured and the vehicle. If the injured loses consciousness in such a case, he or she cannot voice for the rescue.

Meanwhile, in the above related art, the message is automatically sent when the accident occurs. Thus, even when the rescuer, such as the other rider, is nearby, the message is sent to request the rescue. Therefore, an unnecessary request of the rescue is possibly made when the other rider is available for the rescue.

The invention has been made in view of the above problems, and one of purposes thereof is to provide an automatic alerting device and an automatic alerting method capable of alerting a person who is nearby a site of a vehicle accident to the accident when the vehicle accident occurs.

The other purpose of the invention is to provide an automatic alerting device and an automatic alerting method that detect occurrence of a vehicle accident and alert about the occurrence of the accident when a rescuer is not present nearby. Solution to Problem

In order to achieve the above purpose, an automatic alerting device according to a first aspect of the invention is an automatic alerting device that automatically alerts about occurrence of an accident of a vehicle and has: a state detection section that detects a state of the vehicle; an accident determination section that determines whether the vehicle is involved in the accident on the basis of the state of the vehicle detected by the state detection section; an alerting section that alerts outside of the vehicle; and a control section that controls the alerting section. The alerting section has: a sounding section that generates sound to the outside of the vehicle; and a light emitting section that emits light to the outside of the vehicle. The control section makes the sounding section generate the sound and makes the light emitting section emit the light when the accident determination section determines that the vehicle is involved in the accident.

In order to achieve the above purpose, an automatic alerting device according to a second aspect of the invention is the automatic alerting device of the first aspect in which the state detection section has: a wheel speed sensor that detects a wheel speed of the vehicle; and a lateral G sensor that detects lateral G of the vehicle, and in which the accident determination section determines whether the vehicle is involved in the accident on the basis of the wheel speed detected by the wheel speed sensor, an absolute value of the lateral G of the vehicle detected by the lateral G sensor, and a change amount of the lateral G of the vehicle detected by the lateral G sensor.

In order to achieve the above purpose, an automatic alerting device according to a third aspect of the invention is the automatic alerting device of the second aspect in which the accident determination section determines whether a state where the wheel speed detected by the wheel speed sensor is at most equal to a specified value, the absolute value of the lateral G of the vehicle detected by the lateral G sensor is at least equal to a specified value, and the change amount of the lateral G of the vehicle detected by the lateral G sensor is at most equal to a specified value at least continues for specified time, and determines that the vehicle is involved in the accident when determining that the state at least continues for the specified time.

In order to achieve the above purpose, an automatic alerting device according to a fourth aspect of the invention is the automatic alerting device of any one of the first aspect to the third aspect in which the alerting section has a communication section capable of sending a signal to the outside, and in which the control section makes the communication section send the signal to the outside when the accident determination section determines that the vehicle is involved in the accident.

In order to achieve the above purpose, an automatic alerting device according to a fifth aspect of the invention is the automatic alerting device of any one of the second aspect to the fourth aspect that has a rescue determination section determining whether the vehicle has been rescued after occurrence of the accident of the vehicle, in which the rescue determination section determines whether the vehicle has been rescued on the basis of the change amount of the lateral G of the vehicle that is detected by the lateral G sensor, and in which the control section stops an alert by the alerting section when the rescue determination section determines that the vehicle has been rescued.

In order to achieve the above purpose, an automatic alerting device according to a sixth aspect of the invention is the automatic alerting device of the fifth aspect in which the rescue determination section determines whether the change amount of the lateral G of the vehicle that is detected by the lateral G sensor is at least equal to the specified value, and determines that the vehicle has been rescued when determining that the change amount of the lateral G of the vehicle that is detected by the lateral G sensor is at least equal to the specified value.

In order to achieve the above purpose, an automatic alerting method according to a seventh aspect of the invention is an automatic alerting method that automatically alerts about occurrence of an accident of a vehicle and has: a state detection step of detecting a state of the vehicle; an accident determination step of determining whether the vehicle is involved in the accident on the basis of the detected state of the vehicle; and an alerting step of alerting outside when it is determined in the accident determination step that the vehicle is involved in the accident. In the alerting step, a sounding section generates sound, and a light emitting section emits light to alert the outside.

In order to achieve the above purpose, an automatic alerting method according to an eighth aspect of the invention is the automatic alerting method of the seventh aspect in which the state detection step has a step of detecting a wheel speed of the vehicle, an absolute value of lateral G of the vehicle, and a change amount of the lateral G of the vehicle, and in which it is determined in the accident determination step whether the vehicle is involved in the accident on the basis of the wheel speed, the absolute value of the lateral G, and the change amount of the lateral G that are detected in the state detection step.

In order to achieve the above purpose, an automatic alerting method according to a ninth aspect of the invention is the automatic alerting method of the eighth aspect in which, in the accident determination step, it is determined whether a state where the wheel speed is at most equal to a specified value, the absolute value of the lateral G of the vehicle is at least equal to a specified value, and the change amount of the lateral G of the vehicle is at most equal to a specified value at least continues for specified time, and it is determined that the vehicle is involved in the accident when it is determined that the state at least continues for the specified time.

In order to achieve the above purpose, an automatic alerting method according to a tenth aspect of the invention is the automatic alerting method of any one of the seventh aspect to the ninth aspect in which, in the alerting step, a signal is sent to the outside so as to alert the outside when it is determined in the accident determination step that the vehicle is involved in the accident.

In order to achieve the above purpose, an automatic alerting method according to an eleventh aspect of the invention is the automatic alerting method of any one of the eighth aspect to the tenth aspect that has: a rescue determination step of determining whether the vehicle has been rescued on the basis of the change amount of the lateral G of the vehicle; and a step of stopping an alert when it is determined in the rescue determination step that the vehicle has been rescued.

In order to achieve the above purpose, an automatic alerting method according to a twelfth aspect of the invention is the automatic alerting method of the eleventh aspect in which, in the rescue determination step, it is determined whether the change amount of the lateral G of the vehicle is at least equal to the specified value, and it is determined that the vehicle has been rescued when it is determined that the change amount of the lateral G of the vehicle is at least equal to the specified value.

In order to achieve the above purpose, an automatic alerting device according to a thirteenth aspect of the invention is an automatic alerting device that automatically alerts about occurrence of an accident of a vehicle and has: a wheel speed sensor that detects a wheel speed of the vehicle; a lateral G sensor that detects lateral G of the vehicle; an alerting section that alerts outside of the vehicle; a control section that controls the alerting section; and an accident determination section that determines whether the vehicle is involved in the accident on the basis of the wheel speed detected by the wheel speed sensor, an absolute value of the lateral G of the vehicle detected by the lateral G sensor, and a change amount of the lateral G of the vehicle detected by the lateral G sensor. The control section makes the alerting section alert the outside when the accident determination section determines that the vehicle is involved in the accident.

In order to achieve the above purpose, an automatic alerting device according to a fourteenth aspect of the invention is the automatic alerting device of the thirteenth aspect in which the accident determination section determines whether a state where the wheel speed is at most equal to a specified value, the absolute value of the lateral G of the vehicle is at least equal to a specified value, and the change amount of the lateral G of the vehicle is at most equal to a specified value at least continues for specified time, and determines that the vehicle is involved in the accident when determining that the state at least continues for the specified time.

In order to achieve the above purpose, an automatic alerting device according to a fifteenth aspect of the invention is the automatic alerting device of the thirteenth aspect or the fourteenth aspect in which the alerting section has: a sounding section that generates sound to the outside of the vehicle; and a light emitting section that emits light to the outside of the vehicle, and in which the control section makes the sounding section generate the sound and makes the light emitting section emit the light when the accident determination section determines that the vehicle is involved in the accident.

In order to achieve the above purpose, an automatic alerting device according to a sixteenth aspect of the invention is the automatic alerting device of any one of the thirteenth aspect to the fifteenth aspect in which the alerting section has a communication section capable of sending a signal to the outside, and in which the control section makes the communication section send the signal to the outside when the accident determination section determines that the vehicle is involved in the accident.

In order to achieve the above purpose, an automatic alerting device according to a seventeenth aspect of the invention is the automatic alerting device of any one of the thirteenth aspect to the sixteenth aspect that has a rescue determination section that determines whether the vehicle has been rescued after occurrence of the accident of the vehicle, in which the rescue determination section determines whether the vehicle has been rescued on the basis of the change amount of the lateral G of the vehicle, and in which, when the rescue determination section determines that the vehicle has been rescued, the control section stops an alert by the alerting section.

In order to achieve the above purpose, an automatic alerting device according to an eighteenth aspect of the invention is the automatic alerting device of the seventeenth aspect in which the rescue determination section determines whether the change amount of the lateral G of the vehicle is at least equal to the specified value, and determines that the vehicle has been rescued when determining that the change amount of the lateral G of the vehicle is at least equal to the specified value.

In order to achieve the above purpose, an automatic alerting method according to a nineteenth aspect of the invention is an automatic alerting method that automatically alerts about occurrence of an accident of a vehicle and has: a detection step of detecting a wheel speed of the vehicle, an absolute value of lateral G of the vehicle, and a change amount of the lateral G of the vehicle; an accident determination step of determining whether the vehicle is involved in the accident on the basis of the wheel speed, the absolute value of the lateral G, and the change amount of the lateral G; and an alerting step of alerting outside when it is determined in the accident determination step that the vehicle is involved in the accident.

In order to achieve the above purpose, an automatic alerting method according to a twentieth aspect of the invention is the automatic alerting method of the nineteenth aspect in which, in the accident determination step, it is determined whether a state where the wheel speed is at most equal to a specified value, the absolute value of the lateral G is at least equal to a specified value, and the change amount of the lateral G is at most equal to a specified value at least continues for specified time, and it is determined that the vehicle is involved in the accident when it is determined that the state at least continues for the specified time.

In order to achieve the above purpose, an automatic alerting method according to a twenty-first aspect of the invention is the automatic alerting method of the nineteenth aspect or the twentieth aspect in which, in the alerting step, a sounding section generates sound and a light emitting section emits light to alert the outside when it is determined in the accident determination step that the vehicle is involved in the accident.

In order to achieve the above purpose, an automatic alerting method according to a twenty-second aspect of the invention is the automatic alerting method of any one of the nineteenth aspect to the twenty-first aspect in which, in the alerting step, a signal is sent to the outside so as to alert the outside when it is determined in the accident determination step that the vehicle is involved in the accident.

In order to achieve the above purpose, an automatic alerting method according to a twenty-third aspect of the invention is the automatic alerting method of any one of the nineteenth aspect to the twenty-second aspect that has: a rescue determination step of determining whether the vehicle has been rescued on the basis of the change amount of the lateral G of the vehicle; and a step of stopping an alert when it is determined in the rescue determination step that the vehicle has been rescued.

In order to achieve the above purpose, an automatic alerting method according to a twenty-fourth aspect of the invention is the automatic alerting method of the twenty-third aspect in which, in the rescue determination step, it is determined whether the change amount of the lateral G of the vehicle is at least equal to the specified value, and it is determined that the vehicle has been rescued when it is determined that the change amount of the lateral G of the vehicle is at least equal to the specified value.

### Brief Description of Drawings

Fig. 1 is a functional block diagram of an automatic alerting device according to an embodiment of the invention.
Fig. 2 is a control flowchart of an automatic alerting method according to the embodiment of the invention.

### Description of Embodiment

A description will hereinafter be made on an embodiment of the invention with reference to the drawings. An automatic alerting device according to the embodiment of the invention is provided in vehicles such as a two-wheeled vehicle and a four-wheeled vehicle. In this embodiment, a description will be made on an example in which the automatic alerting device is provided in the two-wheeled vehicle. However, the invention is not limited thereto.

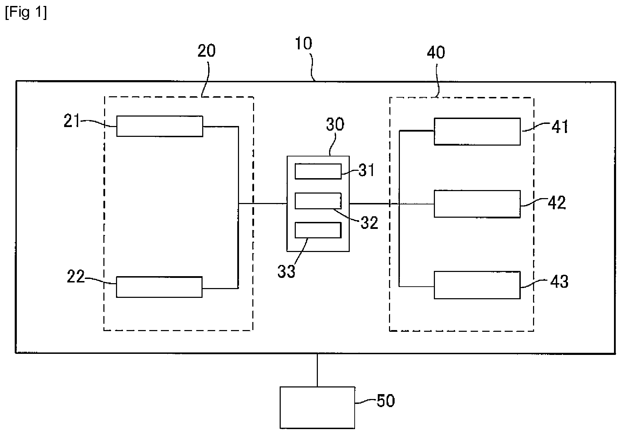

Fig. 1 is a functional block diagram of the automatic alerting device according to the embodiment of the invention. As depicted in Fig. 1, an automatic alerting device 10 according to the embodiment of the invention has: a state detection section 20 that detects a state of the vehicle; an electronic control unit (ECU) 30 that is configured to be able to receive a signal (information) from the state detection section 20; and an alerting section 40 that alerts the outside to a fact that the two-wheeled vehicle is involved in an accident. The automatic alerting device 10 is electrically connected to a battery 50 of the vehicle and is driven by electricity that is supplied from the battery 50.

The state detection section 20 has: a wheel speed sensor 21 that is configured to be able to detect a wheel speed of the two-wheeled vehicle; and a lateral G sensor 22 that is configured to be able to detect a value of lateral G of the two-wheeled vehicle. Note that the "lateral G" herein means gravity acceleration that is applied to a vehicle body of the two-wheeled vehicle in a lateral direction (laterally).

The wheel speed sensor 21 sends a value of the detected wheel speed of the two-wheeled vehicle to the ECU 30. The lateral G sensor 22 sends a value of the detected lateral G of the two-wheeled vehicle to the ECU 30.

The ECU 30 has: an accident determination section 31 that determines whether the two-wheeled vehicle is involved in the accident on the basis of the state of the two-wheeled vehicle that is detected by the state detection section 20; a control section 32 that is configured to control the alerting section 40; and a rescue determination section 33 that determines whether the two-wheeled vehicle has been rescued.

The accident determination section 31 can determine whether the two-wheeled vehicle at least travels on the basis of the value of the wheel speed that is received from the wheel speed sensor 21. That is, the accident determination section 31 can recognize that the two-wheeled vehicle is in an almost stopped state when the value of the wheel speed that is received from the wheel speed sensor 21 is at most equal to a specified value.

The accident determination section 31 is configured to compute an absolute value of the lateral G and a change amount of the lateral G on the basis of the value of the lateral G that is received from the lateral G sensor 22. The accident determination section 31 can determine whether the vehicle body of the two-wheeled vehicle is at least in a fallen state on the basis of the computed absolute value of the lateral G. That is, the accident determination section 31 can recognize that the vehicle body of the two-wheeled vehicle is in the fallen state at a specified angle or larger when the absolute value of the lateral G is at least equal to a specified value. In addition, the accident determination section 31 can also determine whether the two-wheeled vehicle is at least in a stopped state in the lateral direction on the basis of the computed change amount of the lateral G. That is, the accident determination section 31 can recognize that the two-wheeled vehicle is in the almost stopped state in the lateral direction when the computed change amount of the lateral G is at most equal to a specified value.

In the cases where the wheels of the two-wheeled vehicle are each in an almost stopped state, where the vehicle body of the two-wheeled vehicle is in the fallen state at the specified angle or larger, and where the almost stopped state in the lateral direction continues for a specified duration or longer, there are high possibilities of a state where the two-wheeled vehicle is involved in the accident and a state where the two-wheeled vehicle has not been rescued (no one has attempted to stand the two-wheeled vehicle up). Accordingly, based on the value of the wheel speed received from the wheel speed sensor 21 and the lateral G received from the lateral G sensor 22, the accident determination section 31 can indirectly determine states where the two-wheeled vehicle is involved in the accident, where the rider himself/herself cannot stand the two-wheeled vehicle up, and where no rescuer is present nearby.

The rescue determination section 33 is configured to compute the change amount of the lateral G on the basis of the value of the lateral G of the two-wheeled vehicle that is detected by the lateral G sensor 22. The rescue determination section 33 can determine whether the two-wheeled vehicle has been rescued on the basis of the computed change amount of the lateral G. More specifically, the rescue determination section 33 can determine that the two-wheeled vehicle is in a moved state (a rescued state) when the change amount of the lateral G is at least equal to the specified value. A fact that the two-wheeled vehicle has been rescued means a case where the rider only suffers from a minor injury or a case where the rescuer has appeared. Accordingly, by determining whether the two-wheeled vehicle has been rescued, the rescue determination section 33 can indirectly determine a state where the rider is safe or a state where the rescuer has appeared.

The control section 32 is configured to make the alerting section 40 alert when the accident determination section 31 determines that the two-wheeled vehicle is involved in the accident. In addition, the control section 32 is configured to stop an alert by the alerting section 40 when the rescue determination section 33 determines that the vehicle has been rescued.

The alerting section 40 has: a communication section 41 that has a global positioning system (GPS) and the like and is configured to be able to send a signal requesting rescue to a rescue institution, such as a rescue team, a fire department, and a police department; an alarm 42 (a sound generator) that generates sound; and a hazard-warning lamp 43 (a light emitter) that emits light.

The communication section 41 receives a command from the control section 32 and can thereby send, for example, the signal requesting the rescue and position information of the two-wheeled vehicle to the rescue institution via a communication satellite, for example. In addition, the communication section 41 receives the command from the control section 32 and can thereby send a signal to cancel the signal requesting the rescue, which has been sent to the rescue institution, to the rescue institution.

The alarm 42 receives a command from the control section 32 and can thereby sounds an alarm to the outside (around) the two-wheeled vehicle. Note that a horn (a klaxon) that is mounted in the two-wheeled vehicle in advance can be used as the alarm 42.

The hazard-warning lamp 43 receives a command from the control section 32 and can thereby emit the light to the outside (around) the two-wheeled vehicle. Note that a hazard-warning lamp that is mounted in the two-wheeled vehicle in advance can be used as the hazard-warning lamp 43.

Note that the description has been made on the state detection section 20 that has the wheel speed sensor 21 and the lateral G sensor 22 in this embodiment. However, the invention is not limited thereto. Another sensor that can detect the vehicle accident may be provided as the state detection section 20. For example, in the case where the vehicle is the four-wheeled vehicle, a sensor that detects activation of an airbag can be provided. In this way, an accident of the four-wheel vehicle can indirectly be detected.

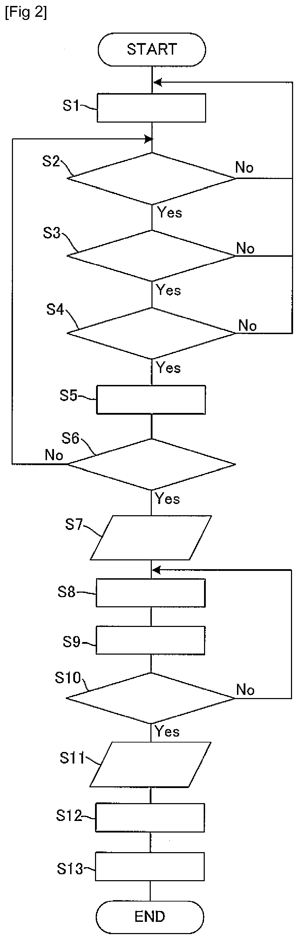

Next, a description will be made on an automatic alerting method of the invention. Fig. 2 is a control flowchart of the automatic alerting method according to this embodiment. Initially, an ignition of the vehicle is turned on, and the electricity is supplied from the battery 50 to the automatic alerting device 10. The automatic alerting device 10 that executes the automatic alerting method of the invention is thereby activated, and a timer in the ECU 30 is reset to 0 (S1).

Once the automatic alerting device 10 is activated, the wheel speed sensor 21 detects the wheel speed of the two-wheeled vehicle and sends the value of the detected wheel speed to the ECU 30. Similarly, the lateral G sensor 22 detects the lateral G of the two-wheeled vehicle and sends the value of the detected lateral G to the ECU 30. The accident determination section 31 in the ECU 30 computes the absolute value and the change amount of the lateral G from the received value of the lateral G.

The accident determination section 31 in the ECU 30 determines whether the value of the wheel speed is at most equal to a specified speed, for example, at most equal to 4.0 km/h (S2). Note that an arbitrary value is stored as this specified speed in a memory of the ECU 30 in advance. If the accident determination section 31 determines that the value of the wheel speed is not at most equal to the specified speed (S2, No), the timer in the ECU 30 is reset to 0 again (S1).

If the accident determination section 31 determines that the value of the wheel speed is at most equal to the specified speed (S2, Yes), the accident determination section 31 next determines whether the absolute value of the lateral G is at least equal to the specified value, for example, at least equal to 0.6 Gal (S3). Note that an arbitrary value is stored as this specified value in the memory of the ECU 30 in advance. If the accident determination section 31 determines that the absolute value of the lateral G is not at least equal to the specified value (S3, No), the timer in the ECU 30 is reset to 0 (S1).

If the accident determination section 31 determines that the absolute value of the lateral G is at least equal to the specified value (S3, Yes), the accident determination section 31 next determines whether the change amount of the lateral G is at least equal to the specified value, for example, at least equal to 2.0 m/s² (S4). Note that an arbitrary value is stored as this specified value in the memory of the ECU 30 in advance. If the accident determination section 31 determines that the change amount of the lateral G is not at least equal to the specified value (S4, No), the timer in the ECU 30 is reset to 0 (S1).

If the accident determination section 31 determines that the change amount of the lateral G is at least equal to the specified value (S4, Yes), the ECU 30 adds 1 to the timer (S5). Note that above-described step 2 to step 4 are repeatedly executed at specified time intervals, for example, at every 20 msecs. An execution interval of step S2 to step S4 can appropriately be set.

The accident determination section 31 determines whether a count value of the timer exceeds a specified value, for example, 90 (S6). Note that an arbitrary value is stored as this specified value in the memory of the ECU 30 in advance. The number of the count is added at specified time intervals (for example, at every 20 msecs). Thus, the count value of the timer represents time from occurrence of the accident.

If the accident determination section 31 determines that the count value of the timer does not exceed the specified value (S6, No), the process returns to step S2, and step S2 to step S5 are repeatedly executed. If the accident determination section 31 determines that the count value of the timer exceeds the specified value (S6, Yes), there are high possibilities of the state where the accident has occurred and the state where the two-wheeled vehicle has not been rescued (no one has attempted to stand the two-wheeled vehicle up) for specified time. Accordingly, in this case, the accident determination section 31 determines that the two-wheeled vehicle is in the state of being involved in the accident, and the control section 32 makes the alerting section 40 alert the outside.

More specifically, the control section 32 makes the communication section 41 send the signal requesting the rescue to the rescue institution via the GPS and the like (S7). In this way, the rescue can automatically be requested to the rescue institution. In addition, the control section 32 turns on the hazard-warning lamp 43 (S8) and makes the alarm 42 sound the intermittent alarm (S9). By sounding the alarm, the nearby rescuer (another rider or the like) can be alerted to the occurrence of the accident. Furthermore, by turning on the hazard-warning lamp 43, the rescuer who has come near a site can be alerted to position of the two-wheeled vehicle.

Next, the rescue determination section 33 in the ECU 30 receives the value of the lateral G of the two-wheeled vehicle from the lateral G sensor 22. The rescue determination section 33 computes the change amount of the lateral G from the received value of the lateral G and determines whether this change amount is at least equal to the specified value, for example, at least equal to 2.0 m/s² (S10). If the rescue determination section 33 determines that the change amount of the lateral G is not at least equal to the specified value (S10, No), the process returns to step S8, and lighting of the hazard-warning lamp 43 and sounding of the alarm (S9) are continued.

If the rescue determination section 33 determines that the change amount of the lateral G is at least equal to the specified value (S10, Yes), in other words, if the rescue determination section 33 determines that the vehicle has been rescued, the control section 32 makes the alerting section 40 stop the alert.

More specifically, the control section 32 makes the communication section 41 send the signal to cancel the signal requesting the rescue to the rescue institution via the GPS and the like (S11). In addition, the control section 32 turns off the hazard-warning lamp 43 (S12) and makes the alarm 42 stop sounding the alarm (S13). In this way, an unnecessary rescue request can be prevented. In addition, after the vehicle is rescued, lighting of the hazard-warning lamp 43 and sounding of the alarm of the alarm 42 can automatically be stopped.

As it has been described so far, in the automatic alerting device 10 and the automatic alerting method of this embodiment, the alarm 42 sounds the alarm when the accident determination section 31 determines that the vehicle is involved in the accident. Thus, when the accident occurs, the other rider or the rescuer near the site of the accident can be alerted to the occurrence of the accident. In addition, because the hazard-warning lamp 43 is turned on, the other rider or the rescuer can be alerted to the position of the vehicle even in an environment with poor visibility. Thus, finding of the accident vehicle can be facilitated.

The state detection section 20 has the wheel speed sensor 21 and the lateral G sensor 22. The accident determination section 31 determines whether the vehicle is involved in the accident on the basis of the wheel speed, the absolute value of the lateral G, and the change amount of the lateral G. In this way, the states where the rider himself/herself cannot stand the two-wheeled vehicle up and where no rescuer is present nearby can indirectly be determined. On the contrary, when the rescuer such as the other rider or the like is present near the site, the alert to the outside is not made. Thus, the unnecessary rescue request can be prevented.

The accident determination section 31 determines that the vehicle is involved in the accident when a state where the wheel speed is at most equal to the specified value, the absolute value of the lateral G is at least equal to the specified value, and the change amount of the lateral G is at most equal to the specified value at least continues for the specified time. In this way, the occurrence of the accident can reliably be detected, and erroneous detection of the occurrence of the accident can be prevented.

When the accident determination section 31 determines that the vehicle is involved in the accident, the communication section 41 sends the signal requesting the rescue to the outside. In this way, the rescue request can be made to the rescue institution.

When the rescue determination section 33 determines that the vehicle has been rescued, the alert by the alerting section 40 is stopped. In this way, the unnecessary rescue request can be prevented. Furthermore, the rescue determination section 33 determines that the vehicle has been rescued when it is determined that the change amount of the lateral G of the vehicle is at least equal to the specified value. Accordingly, the rescue determination section 33 can indirectly determine that a rider is in such a condition that he or she can move the vehicle or that the rescuer is present. Thus, the alert by the alerting section 40 can be stopped only when safety of the rider can be confirmed or only when the rescuer is present.

In this embodiment that has been described so far, when the accident determination section 31 determines the state where the two-wheeled vehicle is involved in the accident, the communication section 41, the alarm 42, and the hazard-warning lamp 43 each make the alert. However, the invention is not limited thereto. The alert may be made to the outside by using at least one of the communication section 41, the alarm 42, and the hazard-warning lamp 43.

Note that, in this embodiment, the accident determination section 31 is configured to compute the absolute value and the change amount of the lateral G on the basis of the value of the lateral G that is detected by the lateral G sensor 22. However, the invention is not limited thereto. The vehicle only needs to have a configuration capable of detecting the absolute value and the change amount of the lateral G. For example, instead of the lateral G sensor 22, a sensor that is configured to detect the value of the lateral G and compute the absolute value thereof or a sensor that is configured to detect the value of the lateral G and compute the change amount thereof may be adopted.

Note that, as an additional function of the automatic alerting device 10 according to this embodiment, the communication section 41 can be used to track a stolen vehicle on the basis of the position information of the GPS when the vehicle is stolen, for example. In addition, as another additional function of the automatic alerting device 10 according to this embodiment, the lateral G sensor 22 can be used to have a configuration to cancel a signal light of the vehicle at a time when the lateral G that is at least equal to a specified value is detected.

The description has been made so far on the embodiment of the invention. The above-described embodiment of the invention is merely used to facilitate understanding of the invention and thus has no intention of limiting the invention. The invention can be modified or improved without departing from the gist thereof, and it is needless to say that equivalent thereof is included in the invention. In addition, components described in the claims and/or the specification can arbitrarily be combined or omitted within the scope where at least a portion of the above-described problem can be solved or within the scope where at least a portion of an effect can be exerted.

## Claims

1. An automatic alerting device that automatically alerts about occurrence of an accident of a vehicle, the automatic alerting device comprising:
a state detection section that detects a state of the vehicle;
an accident determination section that determines whether the vehicle is involved in the accident on the basis of the state of the vehicle that is detected by the state detection section;
an alerting section that alerts outside of the vehicle; and
a control section that controls the alerting section, wherein
the alerting section has: a sounding section that generates sound to the outside of the vehicle; and a light emitting section that emits light to the outside of the vehicle, and
the control section makes the sounding section generate the sound and makes the light emitting section emit the light when the accident determination section determines that the vehicle is involved in the accident.

2. The automatic alerting device according to claim 1, wherein
the state detection section has: a wheel speed sensor that detects a wheel speed of the vehicle; and a lateral G sensor that detects lateral G of the vehicle, and
the accident determination section determines whether the vehicle is involved in the accident on the basis of the wheel speed detected by the wheel speed sensor, an absolute value of the lateral G of the vehicle detected by the lateral G sensor, and a change amount of the lateral G of the vehicle detected by the lateral G sensor.

3. The automatic alerting device according to claim 2, wherein
the accident determination section determines whether a state where the wheel speed detected by the wheel speed sensor is at most equal to a specified value, the absolute value of the lateral G of the vehicle detected by the lateral G sensor is at least equal to a specified value, and the change amount of the lateral G of the vehicle detected by the lateral G sensor is at most equal to a specified value at least continues for specified time, and determines that the vehicle is involved in the accident when determining that the state at least continues for the specified time.

4. The automatic alerting device according to any one of claims 1 to 3, wherein
the alerting section has a communication section capable of sending a signal to the outside, and
the control section makes the communication section send the signal to the outside when the accident determination section determines that the vehicle is involved in the accident.

5. The automatic alerting device according to any one of claims 2 to 4 further comprising:
a rescue determination section that determines whether the vehicle has been rescued after occurrence of the accident of the vehicle, wherein
the rescue determination section determines whether the vehicle has been rescued on the basis of the change amount of the lateral G of the vehicle that is detected by the lateral G sensor, and
when the rescue determination section determines that the vehicle has been rescued, the control section stops an alert by the alerting section.

6. The automatic alerting device according to claim 5, wherein
the rescue determination section determines whether the change amount of the lateral G of the vehicle that is detected by the lateral G sensor is at least equal to the specified value, and determines that the vehicle has been rescued when determining that the change amount of the lateral G of the vehicle that is detected by the lateral G sensor is at least equal to the specified value.

7. An automatic alerting method that automatically alerts about occurrence of an accident of a vehicle, the automatic alerting method comprising:
a state detection step of detecting a state of the vehicle;
an accident determination step of determining whether the vehicle is involved in the accident on the basis of the detected state of the vehicle; and
an alerting step of alerting outside when it is determined in the accident determination step that the vehicle is involved in the accident, wherein
in the alerting step, a sounding section generates sound, and a light emitting section emits light to alert the outside.

8. The automatic alerting method according to claim 7, wherein
the state detection step has a step of detecting a wheel speed of the vehicle, an absolute value of lateral G of the vehicle, and a change amount of the lateral G of the vehicle, and
it is determined in the accident determination step whether the vehicle is involved in the accident on the basis of the wheel speed, the absolute value of the lateral G, and the change amount of the lateral G that are detected in the state detection step.

9. The automatic alerting method according to claim 8, wherein
in the accident determination step, it is determined whether a state where the wheel speed is at most equal to a specified value, the absolute value of the lateral G of the vehicle is at least equal to a specified value, and the change amount of the lateral G of the vehicle is at most equal to a specified value at least continues for specified time, and it is determined that the vehicle is involved in the accident when it is determined that the state at least continues for the specified time.

10. The automatic alerting method according to any one of claims 7 to 9, wherein
in the alerting step, a signal is sent to the outside so as to alert the outside when it is determined in the accident determination step that the vehicle is involved in the accident.

11. The automatic alerting method according to any one of claims 8 to 10 further comprising:
a rescue determination step of determining whether the vehicle has been rescued on the basis of the change amount of the lateral G of the vehicle; and
a step of stopping an alert when it is determined in the rescue determination step that the vehicle has been rescued.

12. The automatic alerting method according to claim 11, wherein
in the rescue determination step, it is determined whether the change amount of the lateral G of the vehicle is at least equal to the specified value, and it is determined that the vehicle has been rescued when it is determined that the change amount of the lateral G of the vehicle is at least equal to the specified value.

13. An automatic alerting device that automatically alerts about occurrence of an accident of a vehicle, the automatic alerting device comprising:
a wheel speed sensor that detects the wheel speed of the vehicle;
a lateral G sensor that detects lateral G of the vehicle;
an alerting section that alerts outside of the vehicle;
a control section that controls the alerting section; and
an accident determination section that determines whether the vehicle is involved in the accident on the basis of the wheel speed detected by the wheel speed sensor, an absolute value of the lateral G of the vehicle detected by the lateral G sensor, and a change amount of the lateral G of the vehicle detected by the lateral G sensor, wherein
the control section makes the alerting section alert the outside when the accident determination section determines that the vehicle is involved in the accident.

14. The automatic alerting device according to claim 13, wherein
the accident determination section determines whether a state where the wheel speed is at most equal to a specified value, the absolute value of the lateral G of the vehicle is at least equal to a specified value, and the change amount of the lateral G of the vehicle is at most equal to a specified value at least continues for specified time, and determines that the vehicle is involved in the accident when determining that the state at least continues for the specified time.

15. The automatic alerting device according to claim 13 or 14, wherein
the alerting section has: a sounding section that generates sound to the outside of the vehicle; and a light emitting section that emits light to the outside of the vehicle, and
the control section makes the sounding section generate the sound and makes the light emitting section emit the light when the accident determination section determines that the vehicle is involved in the accident.

16. The automatic alerting device according to any one of claims 13 to 15, wherein
the alerting section has a communication section capable of sending a signal to the outside, and
the control section makes the communication section send the signal to the outside when the accident determination section determines that the vehicle is involved in the accident.

17. The automatic alerting device according to any one of claims 13 to 16 further comprising:
a rescue determination section that determines whether the vehicle has been rescued after occurrence of the accident of the vehicle, wherein
the rescue determination section determines whether the vehicle has been rescued on the basis of the change amount of the lateral G of the vehicle, and
when the rescue determination section determines that the vehicle has been rescued, the control section stops an alert by the alerting section.

18. The automatic alerting device according to claim 17, wherein
the rescue determination section determines whether the change amount of the lateral G of the vehicle is at least equal to the specified value, and determines that the vehicle has been rescued when determining that the change amount of the lateral G of the vehicle is at least equal to the specified value.

19. An automatic alerting method that automatically alerts about occurrence of an accident of a vehicle, the automatic alerting method comprising:
a detection step of detecting a wheel speed of the vehicle, an absolute value of lateral G of the vehicle, and a change amount of the lateral G of the vehicle;
an accident determination step of determining whether the vehicle is involved in the accident on the basis of the wheel speed, the absolute value of the lateral G, and the change amount of the lateral G; and
an alerting step of alerting outside when it is determined in the accident determination step that the vehicle is involved in the accident.

20. The automatic alerting method according to claim 19, wherein
in the accident determination step, it is determined whether a state where the wheel speed is at most equal to a specified value, the absolute value of the lateral G is at least equal to a specified value, and the change amount of the lateral G is at most equal to a specified value at least continues for specified time, and it is determined that the vehicle is involved in the accident when it is determined that the state at least continues for the specified time.

21. The automatic alerting method according to claim 19 or 20, wherein
in the alerting step, a sounding section generates sound and a light emitting section emits light to alert the outside when it is determined in the accident determination step that the vehicle is involved in the accident.

22. The automatic alerting method according to any one of claims 19 to 21, wherein
in the alerting step, a signal is sent to the outside so as to alert the outside when it is determined in the accident determination step that the vehicle is involved in the accident.

23. The automatic alerting method according to any one of claims 19 to 22 further comprising:
a rescue determination step of determining whether the vehicle has been rescued on the basis of the change amount of the lateral G of the vehicle; and
a step of stopping an alert when it is determined in the rescue determination step that the vehicle has been rescued.

24. The automatic alerting method according to claim 23, wherein
in the rescue determination step, it is determined whether the change amount of the lateral G of the vehicle is at least equal to the specified value, and it is determined that the vehicle has been rescued when it is determined that the change amount of the lateral G of the vehicle is at least equal to the specified value.
